# EUROPEAN PATENT SPECIFICATION

(11) **EP 1 573 764 B1**
(45) Date of publication and mention of the grant of the patent: **07.06.2006**
(21) Application number: 03812617.3
(22) Date of filing: 12.11.2003
(51) Int. Cl.: H01H 13/70, G06F 3/03, G02F 1/133

(54) **TRANSPARENT TOUCH-SENSITIVE SWITCHING SYSTEM**
TRANSPARENTES, BERÜHRUNGSEMPFINDLICHES UMSCHALTSYSTEM
SYSTEME DE COMMUTATION TACTILE TRANSPARENT

(30) Priority: 09.12.2002 EP 02080158
(43) Date of publication of application: 14.09.2005
(73) Proprietor: Koninklijke Philips Electronics N.V., 5621 BA Eindhoven (NL)
(72) Inventor: JOHNSON, Mark, T., NL-5656 AA Eindhoven (NL); DE BOER, Dirk, K., G., NL-5656 AA Eindhoven (NL)
(74) Representative: Eleveld, Koop Jan
(86) International application number: PCT/IB2003/005099
(87) International publication number: WO 2004/053909

(56) References cited:
- EP-A- 1 231 500
- GB-A- 2 348 039
- US-A- 4 516 112
- US-A- 5 159 323
- US-A- 5 847 787
- US-A- 5 852 487

## Description

The invention pertains to an at least partially transparent touch-sensitive switching system and an electro-optical display comprising said touch-sensitive switching system.

A transparent touch-sensitive switching system was disclosed in US 4,516,112. According to this patent a display was made with a display screen. Above the display screen a piezoelectric film was supported for selective localized depression towards the screen. The film has transparent flexible conductive coatings on opposite sides of the piezoelectric film. These transparent flexible conductive coatings are necessary to generate a voltage in response to depression of the film. This system has the disadvantage that production thereof is expensive, since the piezoelectric film must be provided with two extra transparent flexible conductive coatings. Moreover, the addition of these transparent flexible conductive coatings has a disadvantageous effect on the transparency of the display, particularly in displays that operate with low power consumption, such as displays that are in use in mobile systems like mobile telephone displays, notebook computer systems, and the like. Further, these displays are thick and therefore relatively heavy, providing an other disadvantage, particularly in mobile systems.

There is thus a serious need for improvement of the aforementioned system, in respect to manufacturing costs, optical performance (i.e. transparency), weight, and low energy consumption.

The present invention provides an improved at least partially transparent touch-sensitive switching system comprising at least two electrodes provided with means for applying a voltage thereto and spaced from each other by a layer comprising at least one region that optically changes by applying the voltage, and at least one region comprising a piezoelectric material generating a voltage when applying pressure thereto.

The present system can be manufactured at relatively low costs and has excellent optical properties. It should be stressed that the piezoelectric material is preferably a piezoelectric polymer. Such piezoelectric polymer can replace the conventional polymer that is present in almost any electro-optical display. Thus the displays of the invention can be made at about the same costs as conventional displays by simply using a piezoelectric polymer matrix material rather than a normal polymeric matrix material.

Other transparent touch-sensitive switching systems are known, such as disclosed in US 5,159,323 wherein a display is disclosed with a piezoelectric material disposed between two substrates. However, this system is incomparable with the present system in that it makes use of a unique ferroelectric liquid crystalline material that inherently also has piezoelectric properties. Thus this material is used both as light influencing medium and as a pressure sensitive medium. Such system is very restricted in materials than can be used, and consequently very restricted in their applications. In contrast, the present invention provides in a system of a touch-sensitive switching method that can be combined with any material that can give an optical (light) effect, including non-liquid crystalline materials.

The present system allows the manufacture of display cells, which upon touching generates a voltage in the piezoelectric material that serves to detect the touch position. Examples of displays wherein the touch-sensitive system of the invention can be used are PDLC (polymer dispersed liquid crystal), electrophoretic displays, Gyricon^{TM}, PDCTLC (polymer dispersed cholesteric texture liquid crystal), polymer dispersed guest/host systems, and other polymer dispersed LC effects, systems with pixel walls (electrochromic, electrowetting, ASM (axial symmetric microcell) mode LCD, and the like). Preferably, the piezoelectric material is a polymer or a polymer comprising piezoelectric particles, which may be applied to make special spacer constructions, such as in a lithographic manner as disclosed by Odahara et al. in SID 01 Digest, p. 1358, or by micro-embossing. It is however, more preferred to incorporate the piezoelectric material in the pixel. In another preferred embodiment a display is made wherein at least one of the conductive or semi-conductive layers is placed onto a substrate. The substrate may be any material that is commonly used for this purpose, such as glass or plastic, among which polycarbonate, polyurethane and the like. In a preferred embodiment according to the invention the touch-sensitive switching system has at least one of the electrodes placed onto a substrate. The touch-sensitive switching system is at least partially transparent. For many applications it is preferred that the system is fully transparent.

The piezoelectric materials are known in the art and commercially available. Most commonly used is polyvinylidene fluoride (PVDF) film, for instance having a thickness of 10 to 100 µm, but it is clear that any other piezoelectric material can also suitably be used, such as a ferroelectric (chiral smectic C*) elastomer (Brahma, M., Wiesemann, A., Zentel, R., Siemensmeyer, K., Wagenblast, G., Polymer Preprints, 1993, 34 (2), 708; http://staudinger.chemie.uni-mainz.de/akzentel/Publikationen/p99 1.htm#13), and polymers comprising piezoelectric particles (e.g. a titanate).

When using a piezoelectric polymer, the molecular alignment by applying a high-poling voltage creates the piezoelectric effect. Thus the randomly oriented piezoelectric material is ordered on applying a high-voltage poling voltage. Touch signals may then be measured over the pixel electrodes that are already present to drive the pixels, thus no extra connections are necessary in the display. By identification which row and column has generated a voltage upon applying pressure, sensing can be carried out.

The invention is further illustrated by the following figures.
Fig. 1 shows schematically a touch-sensitive pixel according to the invention with a piezoelectric polymer and regions containing liquid crystalline material.
Fig. 2 shows schematically a touch-sensitive pixel according to the invention with a piezoelectric polymer and capsules containing electrostatically charged particles.

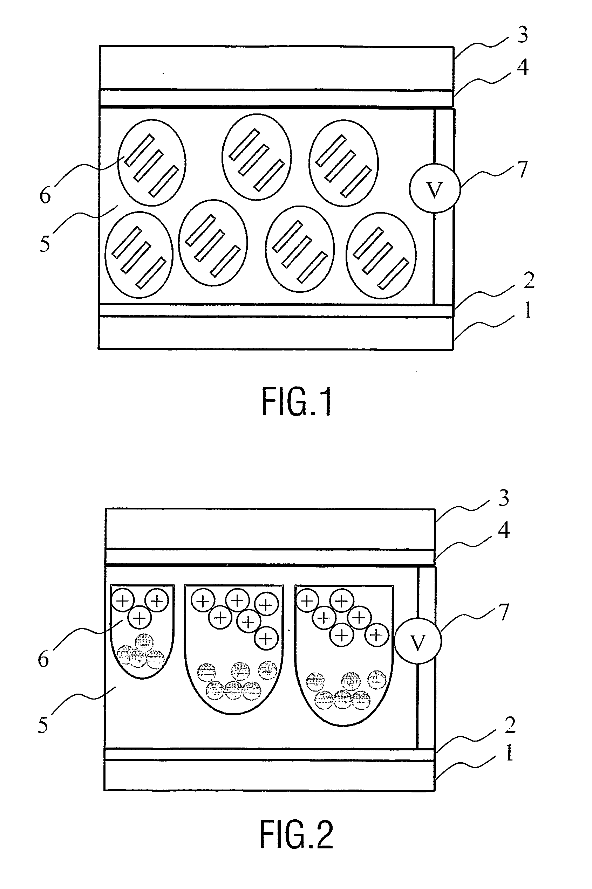

In Fig. 1 a first substrate 1 is provided with an ITO layer (conductive layer) 2. A second substrate 3 is also provided an ITO layer 4. The two substrates are spaced apart by a polymer layer 5, having piezoelectric properties, by being piezoelectric as such or by comprising piezoelectric material. In polymer layer 5 regions 6 are present which may be "floating" droplets comprising liquid crystalline (LC) molecules or may be a capsule filled with LC molecules. If a capsule is used such capsule is made of a thin transparent polymeric film that are commonly used for making capsules. The regions that optically change by applying the voltage are embedded in a matrix of the piezoelectric polymer. Means 7 are present for applying a voltage over the ITO layers 2 and 4.

The layer 5 can be exposed to a high electric field in order to align the piezoelectric polymer.

In this way, the entire pixel region is touch-sensitized, which makes this touch-sensitive approach applicable for flexible and even wearable display applications.

According to this embodiment the touch signal over the pixel electrodes is measured by the connections already present to drive the pixels. Sensing is carried out by simply identifying the row and column that have generated a voltage as a result of the touch pressure.

There method can be used for a wide range of liquid crystal systems that rely on a polymer network to create the desired electro-optical properties. Examples are PDLC, PDCTLC, guest-host systems with polymer networks (as used in camera shutter systems), etc. Each pixel may contain a plurality of regions 6, but more preferably each region 6 is an individual pixel.

An embodiment of an LCD with polymer network where pixels are individually encapsulated using a polymer network is the so-called Axially Symmetric Mode (ASM) used for wide viewing angle LCD's and PALC (plasma addressed liquid crystal) displays.

In Fig. 2 a glass substrate 1 is provided with an ITO layer (conductive layer) 2. A second substrate 3 is a PET layer with a thickness of 175-250 µm, which is also provided with an ITO layer 4. The two substrates are spaced apart by a polymer layer 5, having piezoelectric properties, by being piezoelectric as such or by comprising piezoelectric material. In polymer layer 5 capsules 6 are present filled with electrostatically charged particles, wherein the particles are dispersed in a fluid (gas or liquid). Means 7 are present for applying a voltage over the ITO layers 2 and 4. Again each pixel may contain a plurality of capsules, but more preferably each capsule represents an individual pixel. In this figure is indicated that the electrostatically charged particles are two different sorts of particles, whereof the colors are in contrast to each other and which are dispersed in a colorless fluid. In this particular case the capsules contain black and white particles in a colorless fluid, for instance negative electrostatically charged carbon black particles and positive electrostatically charged white TiO₂ particles. Alternatively, the particles can also be electrostatically charged particles having only one color that is in contrast to the color of the fluid.

In this case, the piezoelectric polymer will be used as binder. The principle of the present invention may advantageously also be used in many other types of electrophoretic display concepts that have been proposed in patent applications. These concepts will also function better if pixels are individually encapsulated using a polymer network. Again, this polymer network could be made piezoelectric to enable touch sensing. For instance, the known display principle called Gyricon^{TM} (ex Xerox) could be made intrinsically touch-sensitive. Here, the polymer network forming the binder around the rotating balls with black and white hemispheres could be made piezoelectric to enable touch sensing.

In another embodiment according to the invention (not shown) two electrodes are placed on the same substrate and spaced from each other by a layer 5 containing regions 6, according to layer 5 and regions 6 of Figures 1 or 2. These electrodes may alternatively also be contained in the same layer 5. The system of the invention may further contain one or more of the usual other layers, such as substrate layers, intermediate layers, compensation or retardation layers, polarization layers, protective layers, and the like.

Several concepts for electrochrornic and electrowetting display pixels will function better if pixels are individually encapsulated using a polymer network. Here also, this polymer network could be made piezoelectric to enable touch sensing.

## Claims

1. An at least partially transparent touch-sensitive switching system comprising at least two electrodes provided with means for applying a voltage thereto, **characterised in that** said electrodes are spaced from each other by a layer comprising at least one region that optically changes by applying the voltage, and at least one region comprising a piezoelectric material generating a voltage when applying pressure thereto.

2. The touch-sensitive switching system of claim 1 wherein at least one of the electrodes is transparent.

3. The touch-sensitive switching system of claim 1 or 2 wherein the piezoelectric material is a piezoelectric polymer.

4. The touch-sensitive switching system of any one of claims 1-3 wherein the regions that optically change by applying the voltage are regions comprising a fluid or a dispersion of particles in a fluid.

5. The touch-sensitive switching system of claim 4 wherein the fluid comprises liquid crystalline molecules.

6. The touch-sensitve switching system of claim 4 wherein the regions comprise a dispersion of particles in a fluid, the particles being electrostatically charged.

7. The touch-sensitive switching system of claim 6 wherein the electrostatically charged particles have a color that is in contrast to the color of the fluid, or wherein the particles are dispersed in a colorless fluid and the dispersion comprises at least two different sorts of electrostatically charged particles, whereof the colors are in contrast to each other.

8. The touch-sensitive switching system of any one of claims 1-7 wherein the regions that optically change by applying the voltage are embedded in a matrix of the piezoelectric material.

9. The touch-sensitive switching system of any one of claims 6-7 wherein the dispersion of electrostatically charged particles in a fluid is enclosed in a capsule of a polymeric material.

10. An electro-optical display comprising the touch-sensitive switching system of any one of claims 1-9.

11. The display of claim 10 wherein each region that optically changes by applying the voltage corresponds to one pixel, and wherein each pixel is a pressure-sensitive pixel.

## Patentansprüche

1. Wenigstens teilweise transparentes berührungsempfindliches Umschaltsystem mit wenigstens zwei Elektroden, die mit Mitteln versehen sind um denselben eine Spannung zuzuführen, **dadurch gekennzeichnet, dass** die genannten Elektroden durch eine Schicht voneinander getrennt sind, die wenigstens ein Gebiet aufweist, das durch Zuführung der Spannung optisch sich ändert, und wobei wenigstens ein Gebiet ein piezoelektrisches Material aufweist, das eine Spannung erzeugt, wenn Druck darauf ausgeübt wird.

2. Berührungsempfindliches Umschaltsystem nach Anspruch 1, wobei wenigstens eine der Elektroden transparent ist.

3. Berührungsempfindliches Umschaltsystem nach Anspruch 1 oder 2, wobei das piezoelektrische Material ein piezoelektrisches Polymer ist.

4. Berührungsempfindliches Umschaltsystem nach einem der Ansprüche 1 - 3, wobei die Gebiete, die optisch ändern durch Zuführung der Spannung, Gebiete sind, die eine Flüssigkeit oder eine Dispersion von Teilchen in einer Flüssigkeit enthalten.

5. Berührungsempfindliches Umschaltsystem nach Anspruch 4, wobei die Flüssigkeit flüssigkristalline Moleküle enthält.

6. Berührungsempfindliches Umschaltsystem nach Anspruch 4, wobei die Gebiete eine Dispersion von Teilchen in einer Flüssigkeit enthalten, wobei die Teilchen elektrostatisch geladen sind.

7. Berührungsempfindliches Umschaltsystem nach Anspruch 6, wobei die elektrostatisch geladenen Teilchen eine Farbe haben, die zu der Farbe der Flüssigkeit kontrastiert, oder wobei die Teilchen in einer farblosen Flüssigkeit dispergiert sind und die . Dispersion wenigstens zwei verschiedene Sorten elektrostatisch geladener Teilchen aufweist, deren Farben zueinander kontrastieren.

8. Berührungsempfindliches Umschaltsystem nach einem der Ansprüche 1-7, wobei die Gebiete, die durch Zuführung der Spannung optisch ändern, in eine Matrix aus dem piezoelektrischen Material eingebettet sind.

9. Berührungsempfindliches Umschaltsystem nach einem der Ansprüche 6 oder 7, wobei die Dispersion elektrostatisch geladener Teilchen in einer Flüssigkeit in eine Kapsel aus einem Polymermaterial eingeschlossen ist.

10. Elektrooptische Wiedergabeanordnung mit dem berührungsempfindlichen Umschaltsystem nach einem der Ansprüche 1-9.

11. Wiedergabeanordnung nach Anspruch 10, wobei jedes Gebiet, das durch Zuführung der Spannung optisch ändert, einem einzigen Pixel entspricht, und wobei jedes Pixel ein berührungsempfindliches Pixel ist.

## Revendications

1. Système de commutation tactile au moins partiellement transparent comprenant au moins deux électrodes qui sont pourvues de moyens pour y appliquer une tension, **caractérisé en ce que** lesdites électrodes sont espacées l'une de l'autre par une couche comprenant au moins une région qui change optiquement par l'application de la tension et au moins une région comprenant un matériau piézo-électrique générant une tension lorsqu'on y applique une pression.

2. Système de commutation tactile selon la revendication 1, dans lequel au moins une des électrodes est transparente.

3. Système de commutation tactile selon la revendication 1 ou 2, dans lequel le matériau piézo-électrique est un polymère piézo-électrique.

4. Système de commutation tactile selon l'une quelconque des revendications précédentes 1 à 3, dans lequel les régions qui changent optiquement par l'application de la tension sont des régions comprenant un fluide ou une dispersion de particules dans un fluide.

5. Système de commutation tactile selon la revendication 4, dans lequel le fluide comprend des molécules à cristaux liquides.

6. Système de commutation tactile selon la revendication 4, dans lequel les régions comprennent une dispersion de particules dans un fluide, les particules étant chargées électrostatiquement.

7. Système de commutation tactile selon la revendication 6, dans lequel les particules électrostatiquement chargées présentent une couleur qui fait contraste avec la couleur du fluide ou dans lequel les particules sont dispersées dans un fluide incolore et la dispersion comprend au moins deux sortes différentes de particules électrostatiquement chargées dont les couleurs font contraste l'une avec l'autre.

8. Système de commutation tactile selon l'une quelconque des revendications précédentes 1 à 7, dans lequel les régions qui changent optiquement par l'application de la tension sont noyées dans une matrice du matériau piézo-électrique.

9. Système de commutation tactile selon l'une quelconque des revendications précédentes 6 à 7 dans lequel la dispersion de particules électrostatiquement chargées dans un fluide est enfermée dans une capsule constituée d'un matériau polymère.

10. Dispositif d'affichage électro-optique comprenant le système de commutation tactile selon l'une quelconque des revendications précédentes 1 à 9.

11. Dispositif d'affichage selon la revendication 10, dans lequel chaque région qui change optiquement par l'application de tension correspond à un pixel et dans lequel chaque pixel est un pixel sensible à la pression.
